# EUROPÄISCHE PATENTANMELDUNG

(11) **EP 3 708 897 A1**
(43) Veröffentlichungstag der Anmeldung: **16.09.2020**
(21) Anmeldenummer: 20160702.5
(22) Anmeldetag: 03.03.2020
(51) Int. Cl.: F17C 5/06

(54) **GAS-TANK-SYSTEM, VERFAHREN ZUM BETREIBEN DES GAS-TANK-SYSTEMS UND ZUG MIT GAS-TANK-SYSTEM**

(30) Priorität: 11.03.2019 DE 102019203268
(71) Anmelder: Siemens Mobility GmbH, 81739 München (DE)
(72) Erfinder: Hanebuth, Marc, 90482 Nürnberg (DE); Meltzer, Katharina, 91058 Erlangen (DE); Tremel, Alexander, 91096 Möhrendorf (DE)

(57) **Zusammenfassung**

Die Erfindung betrifft ein Gas-Tank-System für das Speichern und Betanken eines Fortbewegungsmittels mit Gas ein Verfahren zum Betreiben eines Gas-Tank-Systems und einen Zug mit einem Gas-Tank-System. Das Gas-Tank-System umfasst einen ersten mobilen Tank mit einer ersten verbindbaren Anschlussöffnung und einer zweite verbindbaren Anschlussöffnung geeignet zum Befüllen und/oder Entleeren des ersten Tanks, einen zweiten ortsfesten Tank, wobei der zweite Tank eine erste Öffnung verbunden mit einer ersten Leitung und eine zweite Öffnung verbunden mit einer zweiten Leitung aufweist, wobei der erste mobile Tank und der zweite Tank mittels der ersten Leitung und der ersten Anschlussöffnung und mittels der zweiten Leitung und der zweiten Anschlussöffnung miteinander verbindbar sind, wobei die erste Leitung zum Führen von Gas vom zweiten in den ersten Tank und die zweite Leitung zum Zurückführen des Gases von dem ersten Tank in den zweiten Tank geeignet ist. Vorteilhaft wird Wärme über Entnahme des Gases während des Betankens aus dem ersten Tank geführt.

## Beschreibung

Die Erfindung betrifft ein Gas-Tank-System, ein Verfahren zum Betreiben eines Gas-Tank-Systems sowie einen Zug mit einem Gas-Tank-System.

Ein großer Anteil der Zugstrecken in Europa ist nicht elektrifiziert. Diese Strecken werden heutzutage in der Regel mit Diesel-angetriebenen Zügen bedient. Nachteilig verursachen diese Züge Feinstaub, Stickoxide und lokale CO₂-Emissionen und belasten daher die Umwelt.

Züge, die mit Wasserstoff anstatt Diesel angetrieben werden, haben ein großes Potential den Zugverkehr umweltfreundlicher zu gestalten. Wasserstoff hat den Vorteil einer hohen Energiedichte verglichen mit Batterien in Batterie-betriebenen Zügen, so dass hohe Reichweiten erzielt werden können. Es gibt derzeit unterschiedliche Konzepte, was die Form angeht, in welcher der Wasserstoff an Bord der mobilen Anwendung gespeichert wird.

Ein besonders einfaches und somit robustes Konzept beruht auf gasförmigem komprimiertem Wasserstoff. Typische Druckniveaus für einen vollständig gefüllten Speichertank sind 350 bar und 700 bar, wobei sich diese Drücke auf eine Temperatur von 15 °C beziehen. Für gasförmigen Wasserstoff gibt es inzwischen sehr gut geeignete Drucktanks, die Wasserstoff bei 700 bar bei 15 °C und zeitweise bei 860 bar bei 80 °C speichern können. Sie sind weiterhin sehr leicht und zyklenstabil.

Es handelt sich hierbei um sogenannte Typ IV-Tanks. Sie bestehen aus einem innen liegenden dünnwandigen Kunststoff-Liner, der mit harzgetränkten Kohlefasern umwickelt ist. Der Liner sorgt für die Dichtheit und die Kohlefasern für die Druckstabilität. Für eine Nutzung des unter Druck gespeicherten Wasserstoffs z.B. in einer Brennstoffzelle muss er lediglich entspannt werden. Es sind also keine komplexen Verfahrensschritte nötig.

Es gibt aus der Automobilindustrie bereits Normen für die Befüllung von Wasserstoff-angetriebenen Fahrzeugen. Diese beruhen im Wesentlichen darauf, dass bei dem Befüllvorgang der Druck des von der Tankstelle angebotenen Wasserstoffs kontinuierlich erhöht wird, um so kontinuierlich Wasserstoff in den Tank zu pressen. Wegen der Kompression von bereits vorhandenem Wasserstoff tritt eine starke Wärmetönung auf, so dass die Temperaturen im Tank schnell über 80 °C steigen könnten. Temperaturen über 85 °C sind in der Automobilnorm jedoch nicht für diese Tanks erlaubt, manche Fabrikate schränken den erlaubten Temperaturbereich sogar noch weiter ein. Die Temperaturerhöhung ist in der ersten Phase der Betankung besonders stark, so dass durch eine langsam gewählte Tankgeschwindigkeit eine Überhitzung des Tanks wegen einer Wärmeabgabe über das Tankmaterial an die Umgebung verhindert wird. Die langsamen Tankgeschwindigkeiten sind jedoch aus wirtschaftlicher Sicht ein großer Nachteil für den Betrieb von Wasserstoff-betriebenen Flotten, da sie unter ungünstigen Umständen durchaus im Bereich einer Stunde liegen können.

Es gibt im Stand der Technik bereits Ansätze, die Tankzeit zu verkürzen. Beispielsweise kann gekühlter Wasserstoff getankt werden, um so den Enthalpieeintrag und somit die resultierenden Temperaturen zu verringern. Allerdings sind die MinimalTemperaturen für den getankten Wasserstoff typischerweise bei -40 °C limitiert. Bei noch niedrigeren Temperaturen wären Materialprobleme und ein unverhältnismäßig hoher Energieaufwand für die Kühlung die Folge. Selbst bei der Betankung von Wasserstoff mit einer Temperatur von -40 °C ist die Betankungszeit jedoch häufig wegen der Temperatur innerhalb des Tanks begrenzt.

Es gibt im Stand der Technik weitere Maßnahmen, um beim Tankvorgang die Temperatur im Tank möglichst niedrig zu halten bzw. ein möglichst schnelles Betanken zu realisieren. Zum Beispiel darf der innere Durchmesser der Rohrleitung am Übergabepunkt mit definierter Temperatur und Druck nicht zu gering sein, da wegen der kinetischen Energie des Wasserstoffs ein zusätzlicher Energieeintrag in das Tanksystem auftritt. Für den Fall von zu geringen Rohrdurchmessern kann also die Betankungszeit durch eine zu große Geschwindigkeit des Wasserstoffs limitiert sein.

Eine weitere Maßnahme ist es, die Rohrleitungen des Wasserstoffsystems, durch die die Betankung erfolgt, mit Dämmmaterial zu umgeben und sie so thermisch zu isolieren. Auf diese Weise wird verhindert, dass durch Wärmeeintrag gekühlter Wasserstoff (z.B. auf -40 °C) wieder erwärmt wird und so nicht wie gewünscht mit möglichst niedriger Temperatur das Innere des Tanks erreicht.

Doch selbst wenn die drei genannten Maßnahmen (Betankung mit gekühltem Wasserstoff, großer Rohrinnendurchmesser am Übergabepunkt und thermisch isolierte Betankungsleitungen) getroffen werden, kann die Betankungszeit nachteilig noch unnötig lang sein.

Es ist daher Aufgabe der vorliegenden Erfindung, ein Gastanksystem und ein Verfahren zum Betreiben des Gastanksystems anzugeben, welches kurze Betankungszeiten bei niedrigen Tanktemperaturen ermöglicht.

Die Aufgabe wird erfindungsgemäß mit einem Gastanksystem gemäß Anspruch 1 und einem Verfahren zum Betreiben eines Gastanksystems gemäß Anspruch 12 sowie einem Zug mit dem Gastanksystem gemäß Anspruch 15 gelöst.

Das erfindungsgemäße Gastanksystem für das Speichern und betanken eines Fortbewegungsmittels mit Gas umfasst einen ersten mobilen Tank mit einer ersten verbindbaren Anschlussöffnung und einer zweiten verbindbaren Anschlussöffnung wobei die Anschlussöffnungen geeignet sind zum Befüllen und/oder Entleeren des ersten Tanks. Es umfasst weiterhin einen zweiten ortsfesten Tank, wobei der zweite Tank eine erste Öffnung verbunden mit einer ersten Leitung und eine zweite Öffnung verbunden mit einer zweiten Leitung aufweist. Dabei sind der erste mobile Tank und der zweite Tank mittels der ersten Leitung und der ersten Anschlussöffnung verbindbar und mittels der zweiten Leitung und der zweiten Anschlussöffnung miteinander verbindbar. Dabei ist die erste Leitung geeignet, um Gas vom zweiten in den ersten Tank zu führen. In anderen Worten ist die erste Leitung geeignet, um den ersten Tank zu befüllen. Die zweite Leitung ist geeignet, um das Gas von dem ersten Tank in den zweiten Tank zurückzuführen. In anderen Worten ist die zweite Leitung dazu geeignet, das Gas aus dem ersten Tank zu entnehmen und in den zweiten Tank zurückzuführen.

Das erfindungsgemäße Verfahren zum Betreiben eines Gastanksystems umfasst mehrere Schritte. Zunächst wird ein erster mobiler Tank mit einer ersten und einer zweiten verbindbaren Anschlussöffnung bereitgestellt. Weiterhin wird ein zweiter ortsfester Tank mit einer Öffnung, welche mit einer ersten Leitung verbunden ist und mit einer zweiten Öffnung, welche mit einer zweiten Leitung verbunden ist, bereitgestellt. Anschließend wird der erste Tank und der zweite Tank über die erste Leitung und die erste Anschlussöffnung miteinander verbunden. Anschließend oder zeitgleich erfolgt das Verbinden des ersten Tanks und des zweiten Tanks über die zweite Leitung und die zweite Anschlussöffnung. Der erste Tank kann dann mit Gas aus dem zweiten Tank über die erste Leitung betankt werden. Während oder nach dem Betanken über die erste Leitung wird wenigstens ein Teil des Gases aus dem ersten Tank in den zweiten Tank über die zweite Leitung zurückgeführt.

Vorteilhaft ermöglicht das Zurückführen von Gas während oder nach dem Betankungsvorgang zurück in den zweiten Tank ein konvektives Abführen der Wärme. Die zweite Anschlussöffnung wird dabei für eine Abfuhr des während des Betankungsvorgangs erwärmten Gases genutzt. Vorteilhaft ist es mit dem erfindungsgemäßen Gastanksystem möglich, dosiert während des Betankungsvorgangs des ersten mobilen Tanks, heißes Gas abzulassen während Gas mit einer niedrigeren Temperatur aus dem zweiten Tank nachströmt. Die Menge des entnommenen Gases, welches wenigstens teilweise zurück in den zweiten Tank geführt wird, ist deutlich geringer als die Menge, welche aus dem zweiten Tag in den ersten mobilen Tank geführt wird. Somit erhöht sich die Menge des Gases in dem ersten mobilen Tank. In anderen Worten wird dieser betankt. In Abhängigkeit der Temperatur des zugeführten Gases aus dem zweiten Tank in den ersten Tank ist es möglich, eine bis zu dreifache Menge verglichen mit einem Betanken ohne Rückführung in den mobilen Tank in derselben Zeit zu erreichen.

Es ist ebenso möglich, dass an der ersten Anschlussöffnung und der zweiten Anschlussöffnung bereits Leitungen angebracht sind, welche dann wiederum mit der ersten Leitung und der zweiten Leitung verbunden werden. Weiterhin eine Ausgestaltung möglich, bei der die Tanks lediglich Öffnungen aufweisen, die dann über das Anschließen der ersten und zweiten Leitungen jeweils an beiden Tanks miteinander verbunden werden.

Eine vorteilhafte Ausgestaltung der Erfindung ist es, dass ein Teil des Gases aus dem ersten mobilen Tank in den zweiten mobilen Tank zurückgeführt wird und ein weiterer Teil direkt einer Anwendung, insbesondere einer Brennstoffzelle, zugeführt wird.

In einer weiteren vorteilhaften Ausgestaltung und Weiterbildung der Erfindung ist das Gas Wasserstoff, bzw. wird als Gas Wasserstoff verwendet. Für Wasserstoff gelten hinsichtlich der Dichtheit und der mechanischen Stabilität hohe Anforderungen. Diese müssen auch beim Befüllen des Tanks und beim Entleeren des Tanks eingehalten werden. Daher müssen diese Eigenschaften auch bei erhöhtem Druck oder hohen Temperaturen erhalten bleiben. Vorteilhaft kann die erfindungsgemäße Anordnung des Gastanksystems für bereits existierende Wasserstofftanks, insbesondere für Typ IV Tanks, verwendet werden.

In einer weiteren vorteilhaften Ausgestaltung und Weiterbildung der Erfindung ist die erste Anschlussöffnung des ersten Tanks gegenüberliegend der zweiten Anschlussöffnung des ersten Tanks angeordnet. In dieser Ausgestaltung kann der Tank als Strömungsrohr aufgefasst werden und entsprechend betrieben werden. Dabei tritt das kalte Gas, insbesondere der kalte Wasserstoff, an einer Seite des ersten Tanks ein und wandert durch den ersten Tank hindurch, wobei er sich aufgrund der Druckerhöhung im Tank stetig erwärmt. Das erwärmte Gas, insbesondere der Wasserstoff, kann dann vorteilhaft mit der höchsten Temperatur in ersten Tank an der zweiten Auslassöffnung entnommen werden und wenigstens teilweise in den zweiten Tank zurückgeführt werden.

In einer weiteren vorteilhaften Ausgestaltung und Weiterbildung der Erfindung ist der erste und oder der zweite Tank rotationssymmetrisch ausgestaltet. Eine besonders vorteilhafte rotationssymmetrische Form ist zylinderförmig. Insbesondere eine zylinderförmige Ausgestaltung des ersten mobilen Tanks mit den Anschlussöffnungen gegenüberliegend angeordnet ist vorteilhaft: Dies entspricht nahezu dem idealen Strömungsrohr, wodurch das thermische Profil in dem Strömungsrohr ideal zu der Anordnung der Auslassöffnungen passt, da das kalte Gas in den ersten Tank einströmt und am Ende des ersten Tanks als warmes Gas entnommen wird und teilweise zurückgeführt wird.

In einer weiteren Ausgestaltung und Weiterbildung der Erfindung wird das gesamte Tankvolumen auf mehrere kleine Volumina aufgeteilt. In diesem Fall sind die Teilvolumina jeweils rotationssymmetrisch aufgebaut und sind in ihrer Gesamtheit einschließlich verbindender Rohrleitungen und Armaturen als erster Tank zu verstehen. Vorteilhaft kann der erste Tank kleiner und auf den, insbesondere in einem Fahrzeug, zur Verfügung stehenden Platz angepasst ausgestaltet werden.

In einer weiteren vorteilhaften Ausgestaltung und Weiterbildung weist der zweite Tank wenigstens zwei Druckstufen auf. Vorteilhaft kann das Zurückführen des Gases in die Druckstufe erfolgen, die dem Druck entspricht, den das Gas aus dem ersten mobilen Tank heraus aufweist. Das Komprimieren des Gases kann dann vorteilhaft je nach Anwendung in dem zweiten Tank zwischen den Druckstufen oder nach dem zweiten Tank erfolgen.

In einer weiteren vorteilhaften Ausgestaltung und Weiterbildung der Erfindung umfasst der zweite Tank zwei Kammern, die stofflich miteinander verbunden sind. Diese zwei Kammern stellen die unterschiedlichen Druckstufen des zweiten Tanks dar.

In einer weiteren vorteilhaften Ausgestaltung und Weiterbildung der Erfindung weist die zweite Leitung eine verzweigte Struktur auf, deren erstes Ende zum Anschluss an die zweite Anschlussöffnung des ersten Tanks geeignet ist und wenigstens zwei zweite Enden mit wenigstens zwei Druckstufen des zweiten Tanks verbunden sind. In anderen Worten ist der erste mobile Tank mit wenigstens zwei Kammern des zweiten Tanks verbunden. Vorteilhaft kann dann in Abhängigkeit des Drucks des Gases, welches den ersten mobilen Tank verlässt, das Gas in die entsprechende Kammer des zweiten Tanks zurückgeführt werden. Vorteilhaft wird so der bestehende Druck beibehalten, sodass ein Energiebedarf, welcher für ein Komprimieren im zweiten Tank oder für ein Zurückführen des Gases in den ersten Tank notwendig ist, vorteilhaft vermindert wird.

In einer weiteren vorteilhaften Ausgestaltung und Weiterbildung der Erfindung ist der erste mobile Tank in einem Fortbewegungsmittel, insbesondere in einem Zug, angeordnet. Insbesondere für mobile Anwendungen ist ein schneller Betankungsvorgang vorteilhaft, um eine ausreichende Reichweite bei kurzen Tankzeiten zu erreichen.

In einer weiteren vorteilhaften Ausgestaltung und Weiterbildung der Erfindung umfasst die erste Leitung einen Kompressor. Mittels des Kompressors kann der Gasdruck des Gases, welches aus dem zweiten Tank geführt wird, auf den Tankdruck des ersten mobilen Tanks vorteilhaft erhöht werden. Vorteilhaft wird das Gas, insbesondere der Wasserstoff, so bei niedrigem Druck gespeichert, was kostengünstiger als eine Speicherung bei hohem Druck sein kann.

In einer weiteren vorteilhaften Ausgestaltung und Weiterbildung der Erfindung sind die erste Anschlussöffnung und/oder die zweite Anschlussöffnung mit einer dritten Leitung verbindbar, wobei die dritte Leitung das Gas für eine Nutzung aus dem ersten Tank herausführt. Für den Fall, dass die Anschlussöffnungen gegenüberliegend angeordnet sind, ist es vorteilhaft, dass die dritte Leitung mit der zweiten Anschlussöffnung verbunden ist.

In einer weiteren vorteilhaften Ausgestaltung und Weiterbildung der Erfindung erfolgt das Betanken des ersten mobilen Tanks und das Zurückführen aus dem ersten mobilen Tank in den zweiten Tank wenigstens teilweise simultan. Vorteilhaft wird so die Betankungszeit des ersten Tanks deutlich verkürzt, da kontinuierlich schon während des Betankungsvorgangs Wärme aus dem ersten Tank entfernt wird.

In einer weiteren vorteilhaften Ausgestaltung und Weiterbildung der Erfindung wird das zurückgeführte Gas in dem zweiten Tank komprimiert. Dies ist insbesondere von Vorteil, wenn der zweite Tank mehrere Druckstufen aufweist. Der Druck kann dann von Kammer zu Kammer steigen, d. h. das Gas wird vorteilhaft im Tank komprimiert. Vorteilhaft wird erreicht, dass der Druck des zweiten Tanks nahezu dem Druck des ersten Tanks entspricht, wodurch vorteilhaft Energie für die Arbeit eines Kompressors eingespart wird. Es ist ebenso denkbar, dass der Druck im zweiten Tank oberhalb des Druckes liegt. Vorteilhaft kann der Einsatz eines Kompressors dann vermieden werden.

Die Temperatur des Gases in dem zweiten Tank, welches dann in den ersten Tank geführt wird, liegt insbesondere in einem Bereich zwischen -40 °C und +40 °C. Die Temperatur des Gases, das aus dem ersten Tank in den zweiten Tank zurückgeführt wird, liegt typischerweise in einem Bereich zwischen 40 °C und 80 °C.

In einer vorteilhaften Ausgestaltung und Weiterbildung der Erfindung wird der Druck in dem ersten Tank basierend auf Temperaturdaten eines Temperatursensors, der im ersten Tank oder am Ausgang des ersten Tanks angeordnet ist, geregelt. Es kann dabei vorteilhaft eine maximale Temperatur festgelegt werden, welche dann über ein Regelventil eingestellt werden kann. Es ist ebenso denkbar, dass der Temperatursensor am Ausgang des ersten Tanks als ein Teil des zweiten Tanks ausgebildet ist.

In einer weiteren vorteilhaften Ausgestaltung und Weiterbildung der Erfindung umfasst die erste Leitung ein Druckregelventil, welches geeignet ist, eine kontinuierliche Druckerhöhung bei der Betankung des ersten Tanks zu ermöglichen.

Alternativ zur Temperatur kann auch eine Regelung auf Basis einer Druckmessung erfolgen. Für diesen Fall sollten die Stoffdaten des Gases bekannt sein, also bei welchem Druck welche Temperatur im ersten Tank herrscht, sodass durch einen definierten Druckverlauf sichergestellt werden kann, dass eine maximal zulässige Temperatur nicht überschritten wird.

Es sind auch Kombinationen aus Temperatursensoren und Drucksensoren möglich, mit denen ein optimiertes Betankungsprogramm des ersten mobilen Tanks erstellt werden kann, welches möglichst kurze Betankungszeit aber auch einen hohen Befüllungsgrad des ersten Tanks am Ende des Betankungsvorgangs ermöglicht.

In einer weiteren vorteilhaften Ausgestaltung und Weiterbildung der Erfindung wird ein Teil des Gases direkt aus dem ersten Tank entnommen und in den ersten Tank zurückgeführt. In dieser Ausführung umfasst das Gastanksystem eine vierte Leitung, welche die erste Anschlussöffnung mit der zweiten Anschlussöffnung verbindet. Die vierte Leitung umfasst typischerweise einen Wärmetauscher und ein Gebläse oder eine Düse.

In einer weiteren vorteilhaften Ausgestaltung und Weiterbildung der Erfindung ist der zweite Tank als zylinderförmiger Speicher ortsfest verbaut.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 ein Gastanksystem mit einem ersten mobilen Tank und einem zweiten ortsfesten Tank;
Figur 2 einen Zug mit einem ersten mobilen Tank verbindbar mit einem zweiten ortsfesten Tank zu einem Gastanksystem.

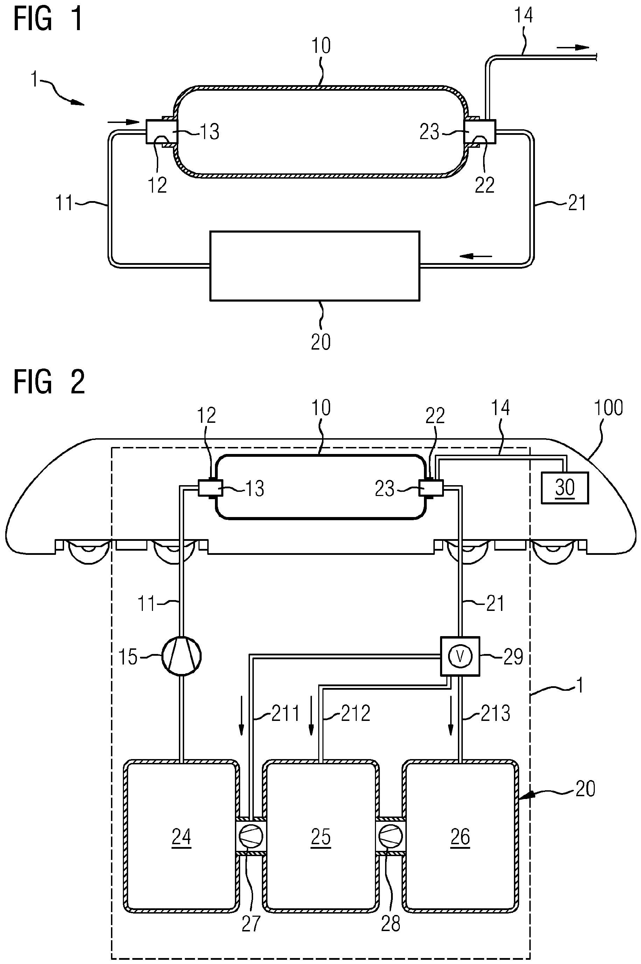

Figur 1 zeigt ein Gastanksystem 1 mit einem ersten mobilen Tank 10 und einem zweiten ortsfesten Tank 20. Der erste Tank 10 weist eine erste Anschlussöffnung 12 und eine zweite Anschlussöffnung 22 auf. Die erste Anschlussöffnung 12 und die zweite Anschlussöffnung 22 sind gegenüberliegend angeordnet. In den Anschlussöffnungen sind Anschlussvorrichtungen 13, 23 angeordnet. Diese Anschlussvorrichtungen ermöglichen ein vereinfachtes Anschließen einer ersten Leitung 11 und einer zweiten Leitung 21 an den ersten mobilen Tank 10. Die erste Leitung 11 und die zweite Leitung 21 sind mit dem zweiten Tank 20 verbunden. Diese Verbindung kann fest ausgebildet sein oder, analog zu den Anschlüssen des ersten Tanks 10, lösbar ausgestaltet sein. Die zweite Anschlussvorrichtung 23 ist in diesem Beispiel mit einer dritten Leitung 14 verbunden. Das Ausführungsbeispiel zeigt das Gastanksystem 10 in dem verbundenen Zustand. Befindet sich der mobile Tank 10 auf einem Fortbewegungsmittel, so sind die Anschlussvorrichtungen 13 und 23 während des Betriebs des Fortbewegungsmittels nicht mit der ersten Leitung 11 und der zweiten Leitung 21 verbunden. Zweckmäßigerweise kann Wasserstoff dann nur noch über die dritte Leitung 14 aus dem ersten Tank entnommen werden.

Zu Beginn eines Betankungsvorgangs werden demnach die erste Leitung 11 mit der ersten Anschlussvorrichtung 13 verbunden und die zweite Leitung 21 mit der zweiten Anschlussvorrichtung 23 verbunden. Aus dem zweiten ortsfesten Tank 20 strömt ein Gas, in diesem Ausführungsbeispiel Wasserstoff, in den ersten Tank 10. Während des Betankens strömt wenigstens teilweise Wasserstoff aus dem ersten mobilen Tank hinaus über die zweite Leitung 21 zurück in den zweiten Tank 20. Vorteilhaft wird dadurch die Wärme, die während des Komprimierens des Wasserstoffs in dem ersten mobilen Tank 10 entsteht, über Konvektion direkt mit dem Wasserstoff, der den ersten mobilen Tank 10 wieder verlässt, aus dem ersten Tank 10 hinaus geführt. Somit sind schnelle Betankungsvorgänge möglich, wobei während des Betankungsvorgangs gewährleistet wird, dass eine kritische Maximaltemperatur des ersten Tanks 10 nicht überschritten wird. Nach Beenden des Betankungsvorgangs wird typischerweise die erste Leitung 11 und die zweite Leitung 21 wiederum vom ersten Tank entfernt. Anschließend strömt der Wasserstoff über die dritte Leitung 14 aus dem Gastanksystem 1 heraus. Typischerweise strömt der Wasserstoff in eine Brennstoffzelle, welche das Fortbewegungsmittel, in dem der erste mobile Tank 10 angeordnet ist, antreibt.

Figur 2 zeigt ein Ausführungsbeispiel mit einem Zug 100 in dem ein erster Tank 10 angeordnet ist. Der erste Tank 10 ist über eine erste Leitung 11 und eine zweite Leitung 21 mit einem zweiten Gastank 20 verbindbar und bildet so ein Gastanksystem 1. Der erste Tank 10 ist analog zum ersten Ausführungsbeispiel aufgebaut. Er umfasst eine erste Anschlussöffnung 12, eine zweite Anschlussöffnung 22 und zwei Anschlussvorrichtungen, welche mit der ersten Leitung 11 der zweiten Leitung 21 verbindbar sind. Der erste Tank 10 ist über eine dritte Leitung 14 mit einer Brennstoffzelle 30 verbunden. Diese Brennstoffzelle treibt den Zug 100 an.

Wird der Zug 100 betankt, so werden die erste Leitung 11 und die zweite Leitung 21 mit dem ersten Tank 10 verbunden. Der zweite Tank 20 weist in diesem Ausführungsbeispiel drei Kammern auf: Eine erste Kammer 24, eine zweite Kammer 25 und eine dritte Kammer 26. Diese drei Kammern stellen drei Druckstufen des zweiten Tanks 20 dar.

In diesem Ausführungsbeispiel verzweigt sich die zweite Leitung 21, und ist mit der ersten Kammer 24, der zweiten Kammer 25 und der dritten Kammer 26 des zweiten Tanks 20 verbunden. Ein Dreiwegeventil 29 regelt, in welche Kammer der Wasserstoff aus dem ersten Tank 10 zurückgeführt wird. In diesem Beispiel herrscht in der dritten Kammer 26 der niedrigste Druck, gefolgt von der zweiten Kammer 25 und der ersten Kammer 24, die den höchsten Druck aufweist. Zwischen der ersten Kammer 24 und der zweiten Kammer 25 ist ein Kompressor mit Absperrventil 27 angeordnet. Zwischen der zweiten Kammer 25 und der dritten Kammer 26 ist ebenfalls ein Kompressor mit Absperrventil 28 angeordnet.

Alternativ oder zeitgleich kann der Wasserstoff in die erste Kammer 24, die zweite Kammer 25 und/oder in die dritte Kammer 26 zurückgeführt werden. Die Entscheidung darüber, in welche der Kammern der Wasserstoff zurückgeführt wird, wird in Abhängigkeit der Druckverhältnisse und Temperaturen gefällt. Typischerweise werden diese Entscheidungen über Sensordaten auf einer Prozessoreinheit automatisch durchgeführt.

Typischerweise erfolgt die Ausgestaltung des zweiten Tanks je nach technischen Anforderungen: Eine Anforderung ist ein möglichst geringer Verbrauch an Kompressionsenergie. Dann ist ein Aufbau, wie er in dem Ausführungsbeispiel zu Figur 2 beschrieben ist, vorteilhaft. Der in dem Ausführungsbeispiel der Figur 2 dargestellte Mehrkammeraufbau des zweiten Tanks kann aber auch in Abhängigkeit der technischen Anforderungen durch alternative Konfigurationen ersetzt werden. Eine weitere Anforderung kann insbesondere ein minimaler Raumbedarf bei maximaler Speicherkapazität für den Tank darstellen. In diesem dritten Ausführungsbeispiel, welches nicht als Figur dargestellt ist, hat der zweite Tank zwei Kammern. In einer ersten Kammer wird der Wasserstoff bei hohen Drücken gespeichert, um möglichst platzsparend ausgestaltet zu sein. In einer zweiten Kammer, welche mit dem ersten Tank verbunden ist, wird der Wasserstoff, der aus dem ersten Tank entnommen wurde, zwischengespeichert und kann abkühlen. Der Wasserstoff wird dann mittels eines Kompressors auf den Druck der ersten Kammer gebracht und strömt von der zweiten in die erste Kammer. Für den Fall, dass der Druck der ersten Kammer höher ist, als der Druck im ersten Tank, kann der Wasserstoff ohne den Einsatz eines Kompressors oder Gebläses in den ersten Tank strömen.

Es sind eine weitere Ausgestaltungen des zweiten Tanks in Abhängigkeit der Anforderungen denkbar. Die Ausgestaltung des zweiten Tanks ist in anderen Worten nicht beschränkt auf die hier dargelegten Ausführungsbeispiele.

Zusätzlich zu der Gasrückführung in den gezeigten Ausführungsbeispielen kann der aus dem ersten Tank 10 abgeführte Wasserstoff auch an Bord des Zuges zurückgeführt werden. Der heiße Wasserstoff verlässt den ersten Tank 10, durchläuft dann einen Wärmetauscher, insbesondere einen Rohrbündelwärmetauscher mit Wasser als Kühlmedium, und wir dann zurück in den ersten Tank 10 geführt. Diese Rückführung erfolgt entweder mit einem Rezykliergebläse, wie es insbesondere auch bei PEM-Brennstoffzellen eingesetzt wird, oder es erfolgt mittels einer Gasstrahlpumpe, um die Druckverluste in den Rohrleitungen auszugleichen.

### Bezugszeichenliste

- 1: Gas-Tank-System
- 10: erster Tank
- 11: erste Leitung
- 12: erste Anschlussöffnung
- 13: erste Anschlussvorrichtung
- 14: dritte Leitung
- 15: Kompressor
- 20: zweiter Tank
- 21: zweite Leitung
- 22: zweite Anschlussöffnung
- 23: zweite Anschlussvorrichtung
- 24: erste Kammer
- 25: zweite Kammer
- 26: dritte Kammer
- 27: Kompressor mit Ventil
- 28: Kompressor mit Ventil
- 29: Drei-Wege-Ventil
- 30: Brennstoffzelle
- 100: Zug

## Patentansprüche

1. Gastanksystem (1) für das Speichern und Betanken eines Fortbewegungsmittels (100) mit Gas umfassend:
- einen ersten mobilen Tank (10) mit einer ersten verbindbaren Anschlussöffnung (12) und einer zweite verbindbaren Anschlussöffnung (22) geeignet zum Befüllen und/oder Entleeren des ersten Tanks,
- einen zweiten ortsfesten Tank (20), wobei der zweite Tank (20) eine erste Öffnung verbunden mit einer ersten Leitung (11) und eine zweite Öffnung verbunden mit einer zweiten Leitung (21) aufweist, wobei der erste mobile Tank (10) und der zweite Tank (20) mittels der ersten Leitung (11) und der ersten Anschlussöffnung (12) und mittels der zweiten Leitung (21) und der zweiten Anschlussöffnung (22) miteinander verbindbar sind, wobei die erste Leitung (11) zum Führen von Gas vom zweiten Tank (20) in den ersten Tank (10) und die zweite Leitung (21) zum Zurückführen des Gases von dem ersten Tank (10) in den zweiten Tank (20) geeignet ist.

2. Gastanksystem (1) nach Anspruch 1, wobei das Gas Wasserstoff ist.

3. Gastanksystem (1) nach einem der Ansprüche 1 oder 2, wobei die erste Anschlussöffnung (12) und die zweite Anschlussöffnung (22) des ersten Tanks (10) gegenüberliegend angeordnet sind.

4. Gastanksystem (1) nach einem der vorhergehenden Ansprüche, wobei der erste und/oder zweite Tank (10, 20) rotationssymmetrisch ausgestaltet ist.

5. Gastanksystem (1) nach einem der vorhergehenden Ansprüche, wobei der zweite Tank (20) wenigstens zwei Druckstufen aufweist.

6. Gastanksystem (1) nach Anspruch 5, wobei der zweite Tank (20) wenigstens zwei Kammern (24, 25, 26) umfasst die stofflich miteinander verbunden sind.

7. Gastanksystem (1) nach einem der Ansprüche 5 oder 6, wobei die zweite Leitung (21) eine verzweigte Struktur aufweist deren erstes Ende zum Anschluss an die zweite Anschlussöffnung (22) des ersten Tanks (10) geeignet ist und wenigstens zwei zweite Enden mit wenigstens zwei Druckstufen des zweiten Tanks (20) verbunden sind.

8. Gastanksystem (1) nach einem der vorhergehenden Ansprüche, wobei der erste mobile Tank (10) in einem Fortbewegungsmittel, insbesondere in einem Zug (100), angeordnet ist.

9. Gastanksystem (1) nach einem der vorhergehenden Ansprüche, wobei die erste Leitung (11) einen Kompressor (15) umfasst.

10. Gastanksystem (1) nach einem der vorhergehenden Ansprüche, wobei die erste Anschlussöffnung (12) und/oder die zweite Anschlussöffnung (22) mit einer dritten Leitung (14) verbindbar sind, wobei die dritte Leitung (14) das Gas für eine Nutzung aus dem ersten Tank (10) herausführt.

11. Gastanksystem (1) nach einem der vorhergehenden Ansprüche, wobei das Gastanksystem (1) eine vierte Leitung umfasst, welche die erste Anschlussöffnung mit der zweiten Anschlussöffnung direkt verbindet, wobei in der vierten Leitung ein Wärmetauscher angeordnet ist.

12. Verfahren zum Betreiben eines Gastanksystems (1) mit folgenden Schritten:
- Bereitstellen eines ersten mobilen Tanks (10) mit einer ersten und einer zweiten verbindbaren Anschlussöffnung (12, 22),
- Bereitstellen eines zweiten ortsfesten Tanks (20) mit einer Öffnung verbunden mit einer ersten Leitung (11) und mit einer zweiten Öffnung verbunden mit einer zweiten Leitung (21),
- Verbinden des ersten Tanks (10) und des zweiten Tanks (20) über die erste Leitung (11) und die erste Anschlussöffnung (12),
- Verbinden des ersten Tanks (10) und des zweiten Tanks (20) über die zweite Leitung (21) und die zweite Anschlussöffnung (22),
- Betanken des ersten Tanks (10) mit Gas aus dem zweiten Tank (20) über die erste Leitung (11),
- Zurückführen wenigstens eines Teils des Gases aus dem ersten Tank (10) in den zweiten Tank (20) über die zweite Leitung (21).

13. Verfahren nach Anspruch 12, wobei das Betanken des ersten mobilen Tanks (10) und das Zurückführen des Gases aus dem ersten Tank (10) in den zweiten Tank (20) wenigstens teilweise simultan erfolgt.

14. Verfahren nach einem der Ansprüche 12 oder 13, wobei als das Gas Wasserstoff verwendet wird.

15. Zug (100) mit einem Gastanksystem (1) gemäß einem der Ansprüche 1 bis 11.
